# EUROPEAN PATENT APPLICATION

(11) **EP 0 689 915 A2**
(43) Date of publication of application: **03.01.1996**
(21) Application number: 94830490.2
(22) Date of filing: 20.10.1994
(51) Int. Cl.: B28B 11/04

(54) **An apparatus for synchronized supply of ceramic tiles to a rotary glazing and decorating machine**

(30) Priority: 29.06.1994 IT MO940099
(71) Applicant: SYFAL S.r.l., I-41049 Sassuolo, (Modena) (IT)
(72) Inventor: Stefani, Franco, I-41049 Sassuolo (Modena) (IT)
(74) Representative: Lanzoni, Luciano

(57) **Abstract**

The apparatus for synchronized supply of ceramic tiles to a rotary glazing and decorating machine comprises a distribution and presynchronization device (6) positioned upstream of a conveyor belt (4) on which a matrix-bearing cylinder (1) operates. The distribution and presynchronization device (6) singly positions the tiles on the conveyor belt (4) in accordance with a relative position of a matrix predisposed on the matrix-bearing cylinder (1). A synchronization apparatus varies by a predetermined time a rotation speed of the matrix-bearing cylinder (1) in accordance with a perceived position of a tile (2) arriving below the matrix-bearing cylinder (1).

## Description

The invention relates to an apparatus for synchronized supply of ceramic tiles to a rotary glazing and decorating machine.

The prior art teaches rotary silk-screen machines wherein synchronization between the matrix, arranged on a rotating drum, and an underlying conveyor plane transporting tiles, is realized by means of mechanical systems exploiting the fact that the matrix-bearing rotary drum can be stopped.

This drum arrest, however, is not possible in rotary machines using the flexographic method, since the zone whereat the glaze is arranged on the matrix is not the same as the zone where the transfer of the glaze on to the tile takes place.

This gives rise to the problem of how to create an effective synchronization system which does not require stops, but which can operate with the machine in motion, and without causing impacts between the transiting tiles.

The present invention aims to obviate the above problems, and is characterised in that it comprises:
- a distribution and presynchronization device positioned upstream of the matrix-bearing cylinder of the rotary glazing and decorating machine, which device has the task of singly locating the tiles in a predetermined position on the rest plane, on which the matrix-bearing cylinder operates according to the relative position of a matrix impressed on the cylinder;
- a matrix synchronization apparatus, prearranged on the cylinder, which senses the presence, in a predetermined position, of a tile sent below the cylinder, determines the timing or positioning error of the matrix to be coupled with the tile, and consequently commands a change in cylinder speed to correct said error.

One advantage of the present invention is its versatility.

A further advantage is that it can distribute and direct the single tiles so that each tile can be printed using a chosen matrix or any part of a matrix arranged along the circumference and in the direction of the axis of the matrix-bearing cylinder.

Further characteristics and advantages of the present invention will better emerge from the detailed description that follows, of an embodiment of the invention, illustrated in the form of a non-limiting example in the accompanying drawings, in which:

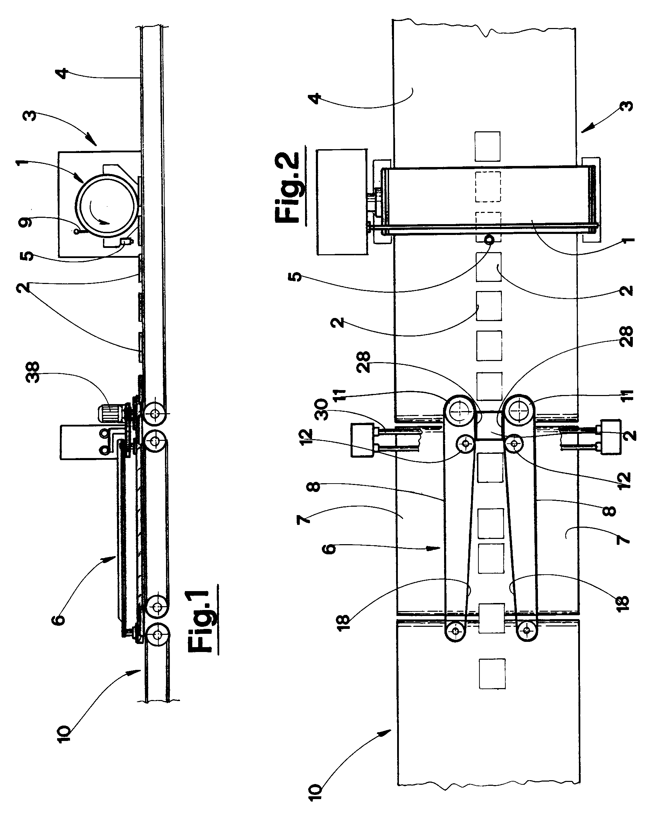

- figure 1 is a schematic vertical-elevation lateral view;
- figure 2 is a schematic plan view from above of figure 1;
- figure 3 is the same plan view from above of figure 2 in a different operative configuration;

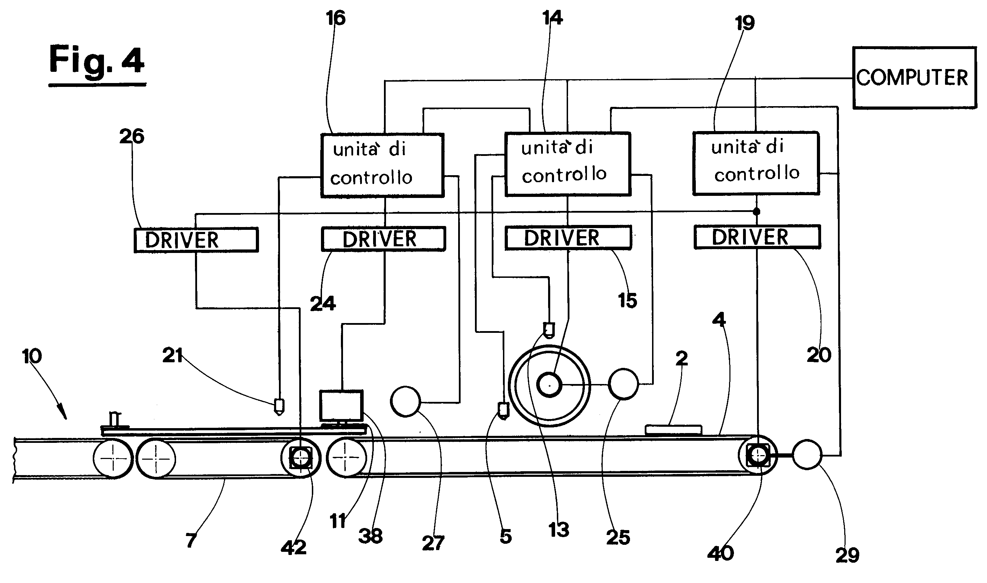

- figure 4 is a block drawing of the invention command and control system.

With reference to the figures of the drawings, 1 denotes a matrix-bearing cylinder of a rotary ceramic tile glazing and decorating machine 3.

The machine 3 essentially comprises a mobile rest plane 4, constituted by a typical conveyor belt, above which the rotary matrix-bearing cylinder 1 operates. The matrix-bearing cylinder 1 is provided with an elastically deformable peripheral portion and a final smooth elastomer external cylindrical surface on which a matrix is recessed, composed of a plurality of microscopic cavities.

A doctor 9 is in contact with the external surface of the matrix-bearing cylinder 1, and has the task of scraping said surface, cleaning it of any excess of glaze and foreign bodies as well as remixing the glaze, freshening it at least in part withing the cavities.

The matrix-bearing cylinder 1 is positioned on the conveyor belt 4 such that it rolls without dragging on an upper surface of each tile 2 transiting on the conveyor belt 4.

The rotary machine 3 is inserted in a typical conveyor line 10 of ceramic tiles.

Immediately upstream (with reference to the conveyor line 10 advancement direction) of the conveyor belt 4, a distribution and presynchronization device 6 is arranged, having the function of singly positioning the tiles 2 to be sent to the rotary machine 3, placing them on the conveyor belt 4 in accordance with a predetermined relation between the relative position of the matrixon the cylinder 1 and the underlying conveyor belt 4.

The distribution and presynchronization device 6 comprises a low-friction conveyor belt 7 positioned immediately upstream of the conveyor belt 4. Two mobile lateral belts 8, situated above the low-friction conveyor belt 7, exhibit two facing branches, predisposed to interact with the lateral edges of the transiting tiles 2. The two facing branches of the mobile lateral belts 8 are synchronized one to another, move in the advancement direction of the low-friction conveyor belt 7, and are subdivided into two portions: a first portion 18, which can be defined as an entrance portion, during which the branches converge; and second portions 28, where the branches are parallel and close together such that they can together grip the sides of a tile 2.

In more detail, the second portions 28 are stretched between two pulleys 11 and 12, the distances between which can be adjusted in accordance with the sizes of the tiles 2 passing through.

Pulley 11 is the drive pulley and has its axis fixed in the advancement direction, whereas pulley 12, by means of a mechanical device (not illustrated), can be located at a predetermined distance from pulley 11 depending on the advancement direction of the tiles 2.

The two mobile lateral belts 8 can be independently displaced one from another, even in a transversal direction to the advancement direction.

In particular, the single constituent groups of the pulleys 11 and 12, are mounted on transversal guides 30 which enable the pulleys 11 and 12 to be positioned perpendicularly to the advancement direction, in any position, and thus permit of adjusting the distance between the facing portions 28 to accommodate any tile size.

A fixed sensor 5, for example a photocell, is situated immediately upstream of the matrix-bearing cylinder 1, and has the task of signalling the presence of a single tile 2 in a predetermined position in relation to the matrix-bearing cylinder 1.

An element 13 identifies a reference point on the matrix on the matrix-bearing cylinder 1. An encoder signals moment-by-moment the position of the matrix.

An axis control unit 14 commands a driver and therefore the rotations of the cylinder 1.

A command unit 16 commands, through a driver 24, the activating of the motors 38, which drive the pulleys 11. The angular position of the the pulleys 11 is sensed by an encoder 27 connected to the command unit 16.

Through a driver 20, a command unit 19 controls a motor 40 driving the conveyor belt 4 as well as, through another driver 26, a motor 42 driving the low-friction conveyor belt 7. The angular position of the motor 40 is read by an encoder 29 connected to the command units 19 and 14.

The command units 14, 16 and 19 are connected to a computer 22.

The sensor 5 signals the presence of a tile on the conveyor belt 4, enabling the system to read off the degree of positioning error of the matrix on the matrix-bearing cylinder 1 in relation to the theoretical position necessary for perfect coupling thereofon the tile 2. The error reading allows the system to command the cylinder 1 to adjust its speed appropriately before the tile 2 achieves contact with the external surface of the matrix-bearing cylinder 1.

Error correction of the above kind occurs when the matrix-bearing cylinder 1 is not in contact with a tile 2: indeed, during the pattern transfer phase the peripheral speed of the matrix-bearing cylinder 1 and the tile 2 must be the same.

The error, in any case, is quite small (a few millimeters) as the tile 2 has undergone prior presynchronization by the distribution and presynchronization device 6.

The tiles 2 coming from the conveyor line 10, either touching one another or placed at variable distabces, are taken on to the low-friction conveyor belt 7 and conveyed by the converging tracts thereof to the gripping point of the second portions 28. Here they are gripped by the two branches 28 while a sensor 21 signals the tile position to the system, which then calculates the position error of the tile in relation to the relevant matrix located on the cylinder 1.

In accordance with the degree of error, the command unit 16 acts on the motor 38, positioning the tile 2 and thus synchronizing it with the matrix.

The length of contact between the branches 28 and the sides of the tile is comprised between half the length and the full length of the tile 2.

The accelarations and decelerations of the mobile lateral belts 8, for the correction of the above-described error, are calculated so that a maximum recuperation equal to the steps between the matrixes (if more than one) on the matrix-bearing cylinder 1 can be made.

To avoid contact between two consecutive tiles 2, when the error cannot be corrected, the command unit 16 slows the tile upstream so as to leave an empty space which is exactly equal to the step between the matrices on the matrix-bearing cylinder 1. In this way, the distribution and presynchronization device 6 introduces tiles 2 on the conveyor belt 4 which are already correctly positioned for respective matrices.

Precise synchronization is subsequently performed by a synchronizing apparatus which varies the matrix-bearing cylinder 1 speed in accordance with the relative position of the tile 2, signalled by the sensor 5, and the matrix identified by the encoder 26 with respect to element 13.

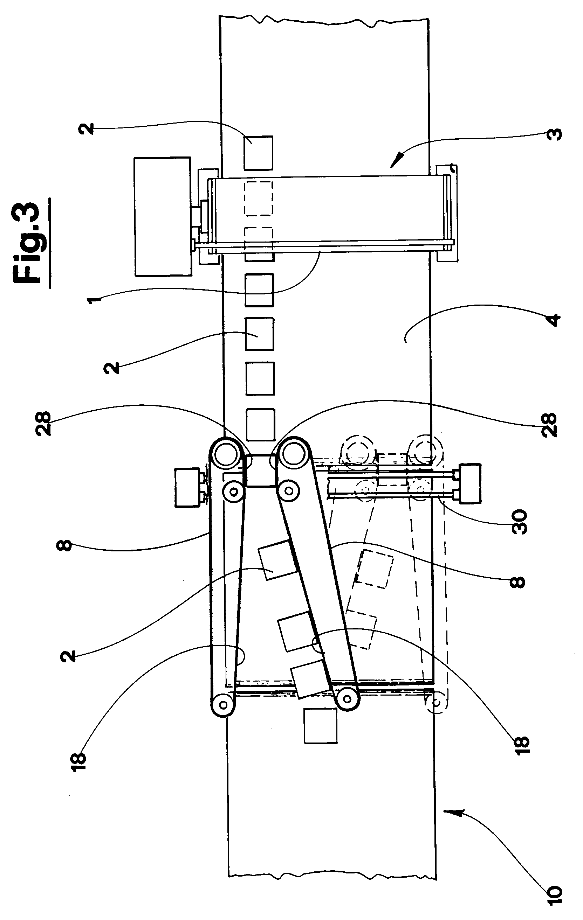

The fact that the mobile lateral belts 8 can be laterally displaced permits a configuration such as that of figure 3 to be achieved, in which the two facing second portions 28 are decentred with respect to the longitudinal axis of the rotary machine 3. The tiles arriving from the conveyor line 10 meet one side 18 of one of the two mobile lateral belts 8, and are thus guided into the second portions 28. This sideways-moving possibility means that the tiles 2 can be channelled variously, and can be useful when a continuous matrix is operating on the matrix-bearing cylinder 1 and a casual variation in tile pattern is required.

## Claims

1. An apparatus for synchronized supply of ceramic tiles to a rotary glazing and decorating machine, of the type comprising a mobile plane and a conveyor belt (4) for tiles (2) whereon a matrix-bearing cylinder (1) operates, characterised in that it comprises:
- a distribution and presynchronization device (6) positioned upstream of and at a predetermined distance from the matrix-bearing cylinder (1), said distribution and presynchronization device (6) positioning tiles (2) sent to the rotary machine (3) equipping the matrix-bearing cylinder (1), positioning and locating the tiles (2) singly on the conveyor belt (4) in accordance with a relative position of a matrix located on the matrix-bearing cylinder (1) with respect to the underlying conveyor belt (4);
- a synchronization of the matrix with a single tile (2) arriving below the cylinder (1), comprising:
- a fixed sensor (5) located immediately upstream of the matrix-bearing cylinder (1) and signalling a presence of a tile in a predetermined position in relation to the matrix-bearing cylinder (1);
- a command and processing device for reading a positioning error of the matrix with respect to a theoretical correct position for coupling on an upper surface of the tile (2), and for consequently commanding an appropriate controlled speed change of the matrix-bearing cylinder (1) to correct the error.

2. An apparatus as in claim 1, characterised in that the distribution and presynchronization device (6) comprises:
- a low-friction conveyor belt (7) situated immediately upstream of the conveyor belt (4);
- two mobile lateral belts (8), located above the low-friction conveyor belt (7). which exhibit two facing branches predisposed to interact with edges of the transiting tiles (2); the two facing branches moving synchronizedly and in a same direction as an advancement direction of the tiles (2) and being subdivided into two portions: first portions (18), during which the branches converge, and second portions (28), in which the branches are parallel and facing at a distance which enables a tile to be gripped therebetween; at least the second portions (28) being translatable into a plurality of positions in a horizontal direction perpendicular to the advancement direction of the low-friction conveyor belt (7) and the conveyor belt (4).

3. An apparatus as in claim 2, characterised in that the second portions (28) exhibit a greater length than half a length of a tile to be gripped and a shorter length that a length of a whole tile to be gripped.

4. An apparatus as in claim 1, characterised in that the processing and command device comprises a processor to which are connected: a command unit (14) of a rotation of the cylinder (1); a command unit (16) of a motor (38) driving the lateral belts; and a command unit (19) controlling motors (40) of the conveyor belt (4).
